(19) Europäisches Patentamt
European Patent Office
Office européen des brevets

(11) Numéro de publication : **0 495 325 A1**

# (12) DEMANDE DE BREVET EUROPEEN

(21) Numéro de dépôt : **91403368.3**

(51) Int. Cl.$^5$ : **C08G 77/62,** C04B 35/58

(22) Date de dépôt : **12.12.91**

(30) Priorité : **19.12.90 FR 9015923**

(43) Date de publication de la demande :
**22.07.92 Bulletin 92/30**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Pons, Pierrette**
**7 Boulevard Sully**
**F-78200 Mantes la Jolie (FR)**
Inventeur : **Waegell, Marie-Bernard**
**16 Avenue Pastré**
**F-13900 Marseille (FR)**
Inventeur : **Colombier, Christian**
**3 Rue de Sèze**
**F-69006 Lyon (FR)**

(74) Mandataire : **Rochet, Michel**
**ELF ATOCHEM S.A. Département Propriété Industrielle 4-8, Cours Michelet La Défense 10 - Cedex 42**
**F-92091 Paris-La-Défense (FR)**

## (54) Polysilazanes réticulés et leur procédé d'obtention.

(57) L'invention concerne le domaine des céramiques et plus précisément des précurseurs réticulés.
Ces précurseurs sont des silazanes réticulés au moyen d'un dérivé de l'aluminium.
Ces produits réticulés présentent un rendement élevé en céramique après pyrolyse.

EP 0 495 325 A1

L'invention concerne le domaine des précurseurs de céramique et plus précisément des polysilazanes réticulés au moyen d'un agent de réticulation organométallique.

Dans le brevet américain 4730026 on propose des polymères comprenant des motifs récurrents

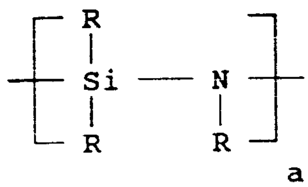

liés entre eux par au moins un pont de formule $-MR'_n-$, ledit ou lesdits ponts étant attachés aux atomes d'azote des motifs récurrents, le symbole M représentant un métal choisi dans les groupes III A, II B, IV B et II A du tableau périodique. Les polymères mis en oeuvre dans la préparation de polymères réticulés appartiennent à la famille des organosilazanes et à titre d'exemple, le brevet cite le poly (1,1 diméthylsilazane), les copolymères (1,2 diméthylsilazane) (1 méthylsilazane) ou encore un silazane polymérisé dérivé de méthylsilazane cyclique. D'une manière générale, ces divers polymères sont préparés à partir d'halogénosilane et d'ammoniac ou d'amine. Selon ce même brevet, le symbole R', dans la formule du réactif métallique, représente un atome d'hydrogène, un groupe alkyle ayant de 1 à 6 atomes de carbone ou l'un des groupes mono-et di-aryl-ou alkylamino, alkylphényle et alkylaryle.

La présente invention a pour objet des polysilazanes réticulés, caractérisés en ce qu'ils sont constitués par une pluralité de motifs de formule

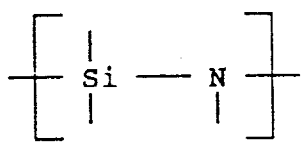 (I)

réunis par au moins un pont de = Al X entre les atomes d'azote desdits motifs, les valences disponibles des atomes de silicium ou d'azote, pouvant porter un atome d'hydrogène, un radical alkyle ayant de 1 à 6 atomes de carbone, un radical vinyle ou allyle, un radical cyclohexyle, un radical aryle, alkylaryle ou aralkyle ayant jusqu'à 18 atomes de carbone, le symbole X représentant un groupement - NHZ dans lequel Z représente un atome d'hydrogène ou un métal ou métalloïde et notamment le silicium, X pouvant également représenter Si ≡.

Dans le présent exposé, l'expression "valences disponibles" désigne les valences des atomes de silicium et d'azote quine sont pas utilisées pour former les enchaînements linéaires ou cycliques des polysilazanes et les ponts précités.

L'invention a également pour objet un procédé de préparation des polysilazanes réticulés définis ci-avant, ledit procédé consistant à faire réagir un composé comportant une pluralité de motifs de formule I avec un amino organoaluminane de formule $H_2N\ Al\ R_1\ R_2$ (II), formule dans laquelle $R_1$ représente un radical alkyle renfermant 1 à 12 atomes de carbone ou un radical phényle, alkyl ($C_1$-$C_4$) phényle ou phényle alkyle ($C_1$-$C_4$) et $R_2$ représente H ou l'un des radicaux représentés par $R_1$, dans des conditions permettant la formation de ponts = Al X.

L'invention concerne également le mélange réactif tel que décrit ci-avant.

Selon une variante ou additionnellement, la réaction peut, lorsque le silicium des motifs de formule I porte un atome d'hydrogène, conduire à une réticulation complémentaire par réaction de SiH avec = NH accompagné de dégagement de $H_2$ et/ou de $NH_3$ et/ou du ou des hydrocarbures correspondant à $R_1$ et $R_2$.

Parmi les atomes ou radicaux pouvant être portés par les valences disponibles, des atomes de silicium ou d'azote (au sens défini précédemment), on citera plus particulièrement l'hydrogène, un radical méthyle, un radical vinyle ou un radical phényle. On donne la préférence aux produits comportant des motifs de formule I dans la formule desquels l'atome d'azote porte un atome d'hydrogène et l'atome de silicium porte un radical méthyle ou vinyle et/ou un atome d'hydrogène. On peut naturellement, en partant de mélanges de réactifs, obtenir des motifs de formule I dans laquelle les substituants des atomes de silicium et d'azote sont différents d'un motif à l'autre.

Les polysilazanes non réticulés comprenant les motifs de formule I sont connus et ne constituent pas un objet de l'invention. Pour leur préparation, on peut se reporter par exemple à la demande de brevet européen publiée sous le n° 209.472.

La réaction conduisant à la formation des ponts = Al X peut d'une manière générale, être obtenue à température ambiante. On peut plus généralement opérer à une température comprise entre - 40 et 200 °C.

La réaction précitée est avantageusement conduite en milieu solvant.

A titre d'illustration des solvants utilisables, on citera notamment les composés halogénés tels que le chlorure de méthylène ; les éthers dialkyliques tels que l'éther diéthylique ; les éthers cycliques tels que le tétrahydrofuranne, le tétrahydropyranne, le 1,4 dioxanne ; les hydrocarbures aliphatiques tels que le pentane ou l'hexane ; les hydrocarbures aromatiques tels que le benzène, le toluène, le xylène.

Dans la préparation des polymères réticulés conformes à l'invention, on met en oeuvre les réactifs (composé comportant une pluralité de motifs de formule I et dérivé de l'aluminium de formule II) en quantités telles que le rapport molaire Si/Al soit compris entre 1 et 100 et de préférence entre 3 et 40. Les compositions comprenant le polysilazane de formule I et l'organoaluminane constituent également un objet de l'invention. Les produits réticulés conformes à l'invention présentent des états physiques divers, allant de liquides visqueux à des solides. Une pyrolyse, effectuée à une température généralement comprise entre 850°C et 1200°C conduit à un rendement (taux de résidu pyrolitique) en céramique nettement plus élevé que celui obtenu à partir du seul composé comportant les motifs de formule I. Par ailleurs, on peut penser qu'outre son rôle d'agent réticulant par incorporation dans la chaine de polysilazane (formation des ponts = Al X), l'amino organoaluminane (II) joue également un rôle catalytique dans une réticulation par des ponts Si H/NH ou dans d'autres réactions de réticulation telles que décrites par exemple dans la demande de brevet européen n°209.472 précitée.

L'exemple suivant illustre l'invention.

## EXEMPLE

Le polysilazane utilisé répond à la formule

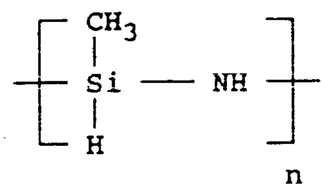

Il a été préparé par réaction d'ammoniac et de méthyldichlorosilane en suivant les conditions décrites dans l'exemple 1 de la demande de brevet européen N° 209.472.

L'aminodiéthylaluminane a été préparé à partir de triéthylaluminium et d'ammoniac (rapport molaire 1/1) dans les conditions décrites dans le brevet US-A- 4 696 968 (exemple 1).

On ajoute une solution d'aminodiéthylaluminane $[NH_2Al(C_2H_5)_2]$ dans l'hexane à une solution de 1 g de polysilazane dans du chlorure de méthylène (rapport molaire Si/Al = 18). Cette opération s'effectue à température ambiante et la réaction est laissée se prolonger pendant 16 heures.

Après élimination de l'hexane et du chlorure de méthylène, on recueille un liquide visqueux soluble dans l'hexane.

Après pyrolyse à 1000°C sous argon, le taux de résidu (taux de céramisation) est de 80 % alors qu'il n'est que de 40 % avec le polysilazane tout seul et de 55 % avec le triéthylaluminium (rapport molaire Si/Al = 21).

Les compositions centésimales du liquide visqueux et de la céramique obtenue après pyrolyse sont les suivantes :

| | C | H | N | Al | Si | O |
|---|---|---|---|---|---|---|
| Liquide visqueux | 23,8 | 7,5 | 18,4 | 2,4 | 43,8 | 3,4 |
| Céramique | 12,48 | 0,24 | 27,6 | 2,9 | 52,9 | 2,7 |

## Revendications

1. Polysilazanes réticulés, caractérisés en ce qu'ils sont constitués par une pluralité de motifs de formule

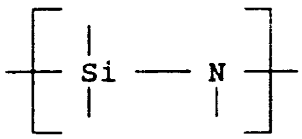

(I)

réunis par au moins un pont de formule = Al X entre les atomes d'azote desdits motifs, les valences disponibles des atomes de silicium ou d'azote pouvant porter un atome d'hydrogène, un radical alkyle ayant de 1 à 6 atomes de carbone, un radical vinyle ou allyle, un radical cyclohexyle, un radical aryle, alkylaryle ou aralkyle ayant jusqu'à 18 atomes de carbone, le symbole X représentant un groupement -NHZ dans lequel Z représente un atome d'hydrogène ou un métal ou métalloïde et notamment le silicium, X pouvant égalenent représenter Si ≡.

**2.** Polysilazanes selon la revendication 1, caractérisés en ce que, dans une partie au moins des motifs de formule I, l'atome d'azote porte un atome d'hydrogène et l'atome de silicium porte un atome d'hydrogène et/ou un radical méthyle ou vinyle.

**3.** Procédé de préparation des polysilazanes selon l'une quelconque des revendications 1 et 2, caractérisé en ce qu'il consiste à faire réagir un composé comportant une pluralité de motifs de formule I avec un amino organoaluminane de formule $H_2$ N Al $R_1$ $R_2$ (II) dans laquelle $R_1$ représente un radical alkyle renfermant 1 à 12 atomes de carbone ou un radical phényle, alkyle ($C_1$-$C_4$) phényle ou phényle alkyle ($C_1$-$C_4$) et $R_2$ représente H ou l'un des radicaux représentés par $R_1$, dans des conditions permettant la formation de ponts = Al X.

**4.** Procédé selon la revendication 3, caractérisé en ce que le rapport molaire Si/Al est compris entre 1 et 100 et de préférence entre 3 et 40.

**5.** Procédé selon la revendication 3, caractérisé en ce que l'aminoorganoaluminane est l'aminodiéthylaluminane [$NH_2Al(C_2H_5)_2$].

**6.** Composition de polysilazane réticulable, constituée par le mélange de polysilazane comprenant une pluralité de motifs de formule I et l'aluminane de formule II dans un rapport molaire Si/Al entre 1 et 100.

**7.** Matériaux céramiques tels que résultant de la pyrolyse des polysilazanes réticulés selon l'une quelconque des revendications 1 et 2.

Office européen des brevets

# RAPPORT DE RECHERCHE EUROPEENNE

Numero de la demande

EP 91 40 3368

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 946 809 (K.J.L. PACIOREK)<br>* Revendications 1,3 *<br>--- | 1 | C 08 G 77/62<br>C 04 B 35/58 |
| A | US-A-4 886 860 (M. ARAI)<br>* Revendication 1; colonne 4, lignes 32-48 *<br>----- | 1 | |
| | | | DOMAINES TECHNIQUES RECHERCHES (Int. Cl.5) |
| | | | C 08 G<br>C 08 L<br>C 07 F |

Le présent rapport a été établi pour toutes les revendications

| Lieu de la recherche | Date d'achèvement de la recherche | Examinateur |
|---|---|---|
| LA HAYE | 12-04-1992 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)